# FASCICULE DE BREVET EUROPEEN

(11) **EP 1 938 011 B1**
(45) Date de publication et mention de la délivrance du brevet: **05.05.2010**
(21) Numéro de dépôt: 06820259.7
(22) Date de dépôt: 06.10.2006
(51) Int. Cl.: F16L 1/20

(54) **DISPOSITIF DE MAINTIEN ET D'AMORTISSEMENT EN POSITION DE TUBES OU PIPELINES DE GRANDE LONGUEUR PAR RAPPORT A DES STRUCTURES SUPPORTS FIXES**
VORRICHTUNG ZUR HALTERUNG SEHR LANGER RÖHREN ODER PIPELINES IN EINER BESTIMMTEN POSITION UND ZU IHRER DÄMPFUNG BEZÜGLICH FESTER TRÄGERSTRUKTUREN
DEVICE FOR MAINTAINING VERY LONG TUBES OR PIPELINES IN POSITION AND DAMPING SAME IN RELATION TO FIXED SUPPORT STRUCTURES

(30) Priorité: 18.10.2005 FR 0553152
(43) Date de publication de la demande: 02.07.2008
(73) Titulaire: Financiere de Beaumont- FDB, 26100 Romans (FR)
(72) Inventeur: COURBIS, Hervé, F-26600 Beaumont Monteux (FR)
(74) Mandataire: Dupuis, François
(86) Numéro de dépôt international: PCT/FR2006/050996
(87) Numéro de publication internationale: WO 2007/045783

(56) Documents cités:
- US-A- 3 557 564
- US-A1- 2003 119 390
- PATENT ABSTRACTS OF JAPAN vol. 1999, no. 10, 31 août 1999 (1999-08-31) & JP 11 141747 A (ISHIKAWAJIMA HARIMA HEAVY IND CO LTD), 28 mai 1999 (1999-05-28)

## Description

L'invention se rattache au secteur technique des systèmes et moyens de contrôle en position de tubes et similaires dans des constructions et installations, où lesdits tubes servent à véhiculer des fluides de toute nature.

L'invention se rattache et trouve une application particulière dans le secteur technique de l'industrie pétrolière et spécifiquement dans l'extraction de matières premières telles que le pétrole en mer.

L'invention à la base est issue d'un problème posé dans l'industrie du pétrole et extraction en mer, exposé ci-après, mais la solution répondant à ce problème, outre l'application concernée, peut trouver d'autres applications dans des situations environnementales mettant en oeuvre des contraintes et sollicitations du même type.

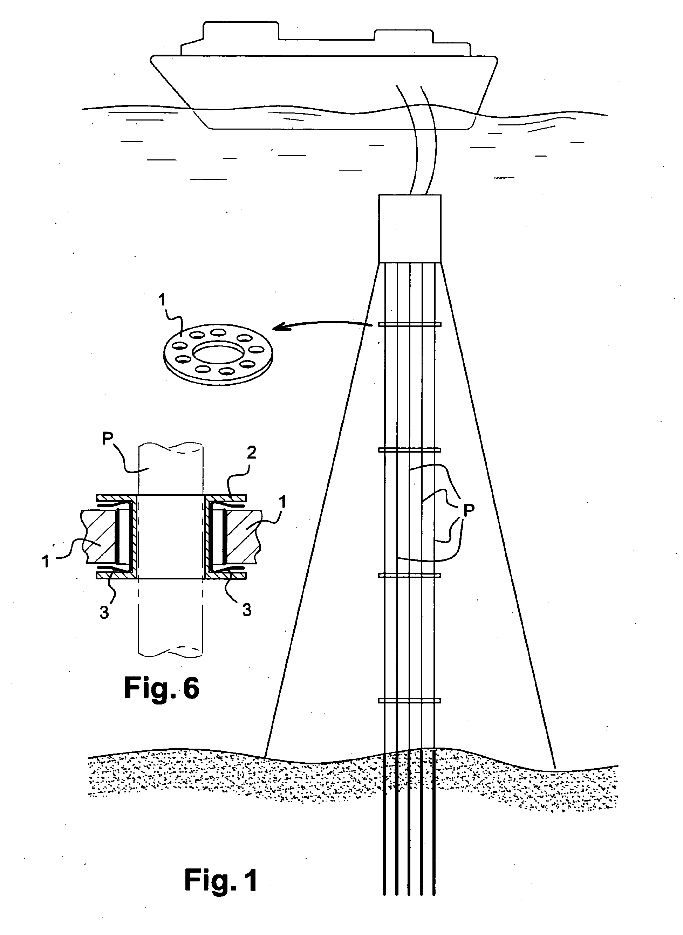

Par rapport au problème initial posé de l'extraction pétrolière en eaux profondes, mais aussi d'installations utilisant des pipelines, il est nécessaire de maintenir des lignes de pipelines qui se présentent en faisceaux par rapport à des structures fixes qui sont soit des liaisons au sol, soit des liaisons supports intermédiaires. Selon l'environnement dans lequel s'intègre les pipelines, et par exemple en mer, les installations sont soumises à des mouvements de houles, de courants d'amplitude très variables, des mouvements de terrain, des dilatations différentielles entre les matériaux en fonction des températures. La mise en faisceaux de pipelines à partir de structures supports en barillet requiert un contrôle de la position de chacun des pipelines sollicités par les contraintes précitées, tout en évitant leur détérioration. On a ainsi représenté de manière schématique figure 1 la mise en oeuvre selon l'art antérieur d'un faisceau de pipelines avec des moyens écarteurs disposés à des profondeurs différentes, ces pipelines étant reliés à un réservoir tampon immergé faisant office de flotteur, lui-même relié au bateau, le faisceau de pipelines étant relié aux moyens de forage classiques. Les profondeurs pour ce type d'installation sont conséquents, permettant d'aller jusqu'à 2.000 mètres. Des lignes ou câbles d'amarrage et de stabilisation assurent et contrôlent le positionnement du réservoir tampon et son débattement, et donc ainsi des pipelines.

Pour assurer le maintien des pipelines par rapport aux structures supports en barillet selon l'art antérieur, on utilise des moyens mécaniques complexes de serrage, avec des cerclages métalliques et des moyens d'isolation thermique en mousse (US-A-2003/0119390)-

Les solutions connues restent complexes à réaliser, coûteuses et peu pratiques à installer en montage et démontage pour effectuer les opérations de maintenance.

La démarché du demandeur a donc été de réfléchir et rechercher une autre solution qui répond parfaitement aux contraintes techniques et environnementales, qui soit facile à mettre en place en égard des problèmes de maintenance, et qui réponde bien sûr aux contraintes de dilatation des pipelines.

La solution apportée répond à l'ensemble de ces objectifs et trouve une application immédiate dans l'exploitation pétrolière en eaux profondes, mais aussi et de manière plus générale dans le contrôle de la position de tuyaux ou pipelines pour la distribution et circulation de fluides dans d'autres situations environnementales.

La solution apportée est avantageuse dans la simplicité de mise en oeuvre et de montage, et en particulier in situ lors des travaux de maintenance.

Selon l'invention, le dispositif de maintien et d'amortissement en position de tubes de grande longueur par rapport à des structures supports fixes, est remarquable en ce que ledit dispositif est inséré entre un pipeline et un support fixe, ce dernier autorisant le positionnement d'une pluralité de pipelines, et en ce que le dispositif comprend un manchon cylindrique présentant un moyeu central et des flancs en débordement extérieur et autorisant le passage par un alésage central d'un pipeline, ledit manchon recevant autour de son moyeu central et ses flancs un composant profilé à capacité élastique de déformation assurant des fonctions d'amortissement au moins radial et de rappel élastique, ledit composant étant déformé temporairement lorsqu'il est susceptible de venir en butée contre ledit support fixe, selon les mouvements induits du pipeline selon les contraintes environnementales, ledit dispositif assurant le contrôle et l'absorption des mouvements axiaux et radiaux suite à la position du pipeline et de sa dilatation.

Ces caractéristiques et d'autres encore ressortiront bien de la suite de la description.

Pour fixer l'objet de l'invention illustrée d'une manière non limitative aux figures des dessins où :
- la figure 1 est une vue à caractère schématique illustrant l'application du dispositif de l'invention pour la tenue d'un faisceau de pipelines en eaux profondes.
- la figure 2 est une vue à caractère schématique illustrant les sollicitations exercées sur les pipelines par rapport aux structures fixes d'écartement et de contrôle de position.
- la figure 3 est une vue illustrant le dispositif de l'invention dans une première mise en oeuvre, et ce avant montage.
- la figure 4 est une vue partielle et en coupe longitudinale du dispositif selon l'invention après montage.
- la figure 5 est une vue partielle et en coupe illustrant le moyen amortisseur inclus dans le dispositif dans une mise en oeuvre de l'invention.
- la figure 6 est une vue partielle du dispositif monté sur une structure support pouvant constituer un barillet.

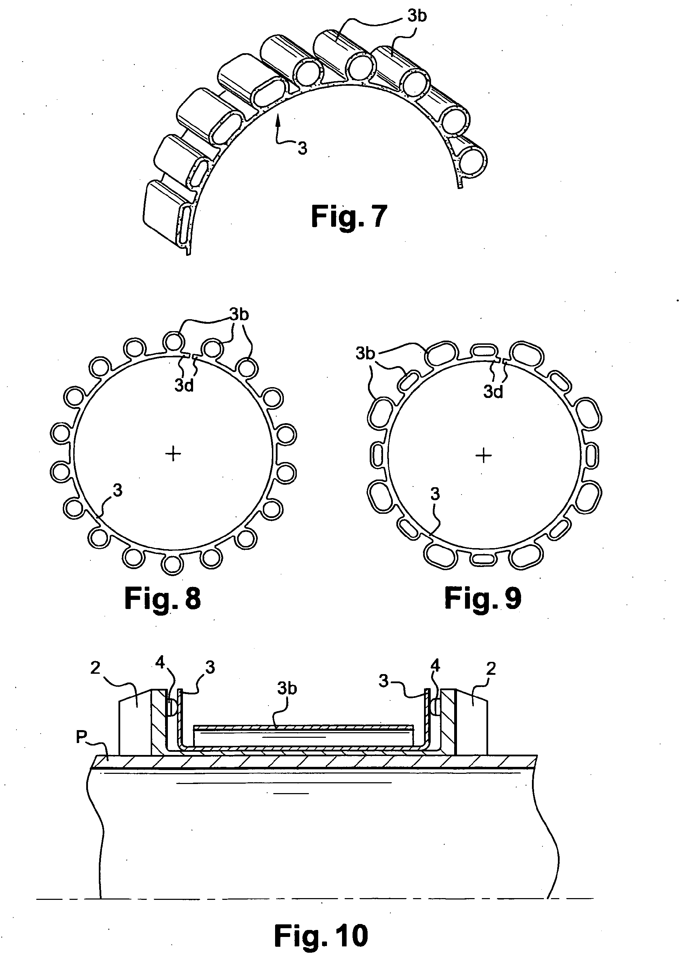

- la figure 7 est une vue partielle du moyen amortisseur de l'invention agencé avec une configuration d'une pluralité de rondins transversaux amortisseurs avec une simulation de déformation des boudins dans des configurations différentes.
- les figures 8 et 9 sont des vues illustrant deux variantes de mise en oeuvre du moyen amortisseur intégrant des boudins transversaux de profil différent.
- la figure 10 est une vue en variante du dispositif de maintien selon l'invention.

Afin de rendre plus concret l'objet de l'invention, on le décrit maintenant d'une manière non limitative illustrée aux figures des dessins.

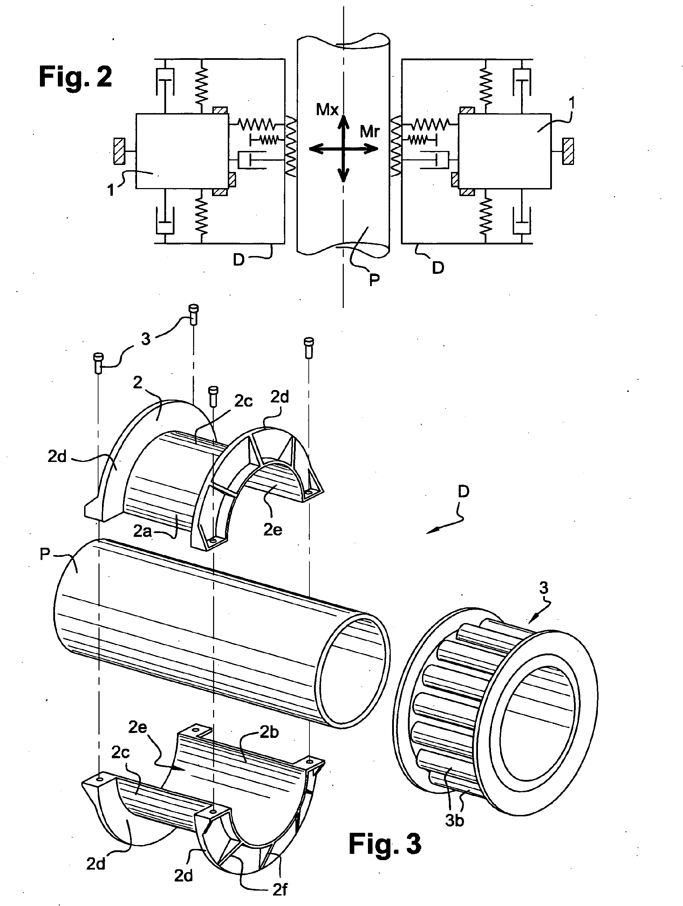

Le dispositif de maintien et d'amortissement en position de tubes de grande longueur est référencé dans son ensemble par (D), et est représenté avant montage figure 2 sur un pipeline (P) ou tube. Le dispositif est destiné à être inséré entre le pipeline et un support fixe (1) qui peut être constitué par exemple sous la forme d'un barillet comme représenté figure 1 par le centrage et le positionnement d'une pluralité de pipelines montés en faisceaux. Ce support fixe (1) est agencé directement ou avec des moyens rapportés en définissant des ouvertures de passage de chaque pipeline et de son dispositif (D) associé.

On a tout d'abord représenté figure 2 des dessins et de manière schématique les différentes fonctions mises en oeuvre par le dispositif (D) de l'invention par rapport à des parties fixes et au pipeline.

On a donc utilisé les symboles suivants :
D : dispositif de l'invention pris dans son ensemble
P : pipeline
1 : structure fixe
Mx : mouvement axial
Mr : mouvement radial
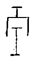 : fonction amortissement
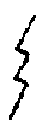 : fonction glissement
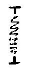 : fonction ressort

Le dispositif (D) décrit ci-après répond à toutes ces exigences.

Chaque dispositif (D) de maintien et d'amortissement en position des pipelines est constitué par un manchon (2) cylindrique réalisé en deux demi-parties (2a-2b) qui après rapprochement sont solidarisées entre elles par des moyens de liaison (6). Chaque manchon comprend un moyeu central (2c) et latéralement deux flancs (2d) en débordement extérieur et en retrait par rapport aux extrémités du moyeu conformé monobloc, l'ensemble étant réalisé en une matière plastique rigide. Le manchon présente un alésage intérieur (2e) lisse intérieurement, qui est d'un diamètre sensiblement supérieur au diamètre du pipeline traversant. Lesdits flancs (2d) forment couronnes et extérieurement peuvent être agencés avec des nervures de rigidification (2f). Les moyens de liaison sont de tous types connus et appropriés tels que boulonnage. On conçoit donc que la mise en place du manchon est aisée autour de la partie correspondante du pipeline. Le dispositif comprend à titre complémentaire au moins un composant supplémentaire (3) profilé assurant une fonction d'amortissement, ou deux composants (3-4) selon la configuration choisie.

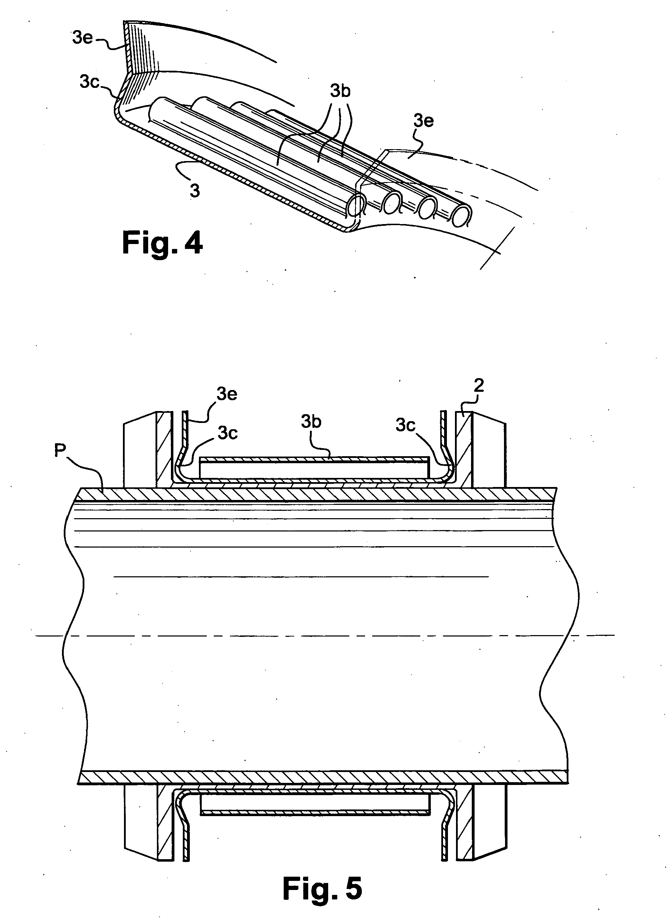

Le composant (3) assurant une fonction amortisseur est conçu et réalisé pour former une bague disposée autour du moyeu du manchon et en regard de ses flancs latéraux intérieurs. Cette bague est elle-même agencée avec une base (3a) recevant des moyens amortisseurs, d'une part au moins des moyens amortisseurs transversaux, et le cas échéant, des moyens amortisseurs (3c) latéraux. Cette bague selon l'invention entoure le moyeu du manchon en l'état d'utilisation, et elle est réalisée en matériau élastomère avec mémoire élastique de déformation, et plus particulièrement celui connu sous la marque enregistrée « COURBHANE ». Cette bague est fendue transversalement, c'est-à-dire qu'elle est susceptible de s'ouvrir pour être introduite autour du moyeu du manchon, et se « refermer », c'est-à-dire avec ses extrémités (3d) bout à bout, une fois mise en place. Cette bague est ainsi centrée autour du moyeu du manchon, et elle présente le long de chacune de ses bordures périphériques des parois en retour (3e) venant en regard des parois intérieures correspondantes du manchon. Selon l'invention, la bague présente sur toute sa longueur développée et transversalement une pluralité de moyens amortisseurs sous forme de boudins (3b) conformés monoblocs avec une capacité élastique de déformation par écrasement. Ces boudins transversaux sont de section identique ou différenciée, ont des épaisseurs identiques ou différenciées pour permettre ainsi l'absorption des efforts d'écrasement de manière identique ou différenciée. De manière avantageuse, la longueur des boudins est telle qu'elle est inférieure à la largeur de la bague entre ses parois (3e) pour permettre une bonne déformabilité. Ces boudins (3b) ont ainsi une capacité de déformation dans le sens radial d'écrasement de la bague. D'autres moyens amortisseurs sont utilisés et peuvent être soit inclus dans la configuration de la bague (3), soit extérieurs à celle-ci. Dans le premier cas illustré aux figures 5 et 6 en particulier, les parois ou flancs latéraux (3c) de la bague sont agencés avec des bordures de jonction en débordement (3c) ou en saillie extérieure de manière à venir se centrer et en appui contre les flancs (2d) en regard du manchon. Lesdites bordures (3c) ainsi conformées assurent une fonction amortisseur complémentaire par déformation élastique lorsqu'elles sont sollicitées dans un plan axial.

En variante de la figure (10), les flancs latéraux (3e) de la bague sont droits et perpendiculaires par rapport à la base de la bague. Dans ce cas, l'amortissement axial est assuré par des plots (4) en matériau élastomère et déformable, disposés et fixés de toute manière appropriée sur les flancs intérieurs des parois du manchon.

Le dispositif selon l'invention est de conception simple, facile à mettre en oeuvre et d'une grande souplesse de fonctionnement. Les caractéristiques techniques de la bague peuvent être adaptées en fonction des applications du dispositif. Les sections des bordures sont variables, le cas échéant pour permettre une dégressivité ou progressivité des efforts d'amortissement.

Lesdits boudins sont présentés dans une position transversale par rapport au développement de la bague, mais ils peuvent être disposés différemment en oblique, ou être conformés en chevrons ou être répartis différemment.

Le dispositif est ainsi monté entre le pipeline et la structure fixe. C'est donc celle-ci qui vient en appui contre les parties d'amortissement de la bague. Le dispositif est donc en quelque sorte mis en suspension et flottant entre le pipeline et la structure fixe en absorbant toutes les forces de sollicitation du milieu. Le dispositif de par l'alésage lisse du manchon autorise le débattement axial du pipeline, son débattement radial par le jeu existant, par l'absorption aussi des dilatations des pipelines. Suite aux variations de température du milieu environnemental et des fluides transportés.

Sans sortir de l'invention, les boudins et/ou plots d'amortissement peuvent être pleins ou creux. Lesdits boudins et/ou plots et/ou lèvres assurent ainsi des fonctions amortisseurs et ressorts par effet de compression et détente élastique.

Le montage flottant des dispositifs (D) sur la structure fixe tout en étant centré et contrôlé en appui sur les faces transversales offre une très grande adaptabilité des dispositifs. Le changement en maintenance est aisé, peut se faire en tous lieux et in situ en particulier.

Les pipelines disposés en faisceaux à partir d'une pluralité de structures fixes superposées sont parfaitement tenus, mais de manière non rigide. Des moyens de liaison non représentés entre les différents dispositifs montés sur une structure fixe sont prévus le cas échéant tout en permettant un montage / démarrage rapide.

L'invention répond parfaitement aux besoins identifiés dans le cadre de pipelines pour l'industrie pétrolière en eaux profondes, mais toutes autres applications sont possibles dans le cadre de mise en oeuvre de contraintes extérieures du même type.

## Revendications

1. Dispositif de maintien et d'amortissement en position de tubes de grande longueur par rapport à des structures supports fixes, ledit dispositif étant inséré entre un pipeline et un support fixe (1), ce dernier autorisant le positionnement d'une pluralité de pipelines, le dispositif comprenant un manchon (2) cylindrique présentant un moyeu central (2c) et des flancs (2d) en débordement extérieur et autorisant le passage par un alésage central (2e) d'un pipeline, ledit manchon recevant autour de son moyeu central et ses flancs un composant (3) profilé à capacité élastique de déformation assurant des fonctions d'amortissement au moins radial et de rappel élastique, ledit composant (3) étant déformé temporairement lorsqu'il est susceptible de venir en butée contre ledit support fixe, selon les mouvements induits du pipeline selon les contraintes environnementales, ledit dispositif assurant le contrôle et l'absorption des mouvements axiaux et radiaux suite à la position du pipeline et de sa dilatation.

2. Dispositif selon la revendication 1, **caractérisé en ce que** le manchon (2) cylindrique est réalisé en deux demi-parties (2a-2b) qui après rapprochement sont solidarisées entre elles par des moyens de liaison (6), et **en ce que** le manchon comprend le moyeu central (2c) et latéralement deux flancs (2d) en débordement extérieur et en retrait par rapport aux extrémités du moyeu conformé monobloc, et **en ce que** l'ensemble étant réalisé en une matière plastique rigide, et **en ce que** ledit alésage intérieur (2e) du manchon est lisse intérieurement et est d'un diamètre sensiblement supérieur au diamètre du pipeline traversant.

3. Dispositif selon la revendication 2, **caractérisé en ce que** lesdits flancs (2d) forment couronnes et extérieurement peuvent être agencés avec des nervures de rigidification (2f).

4. Dispositif selon l'une quelconque des revendications 1 et 2, **caractérisé en ce qu'**il comprend au moins un composant supplémentaire (3) profilé assurant une fonction d'amortissement, et **en ce que** le composant (3) est conçu et réalisé sous forme d'une bague disposée autour du moyeu du manchon et en regard de ses flancs latéraux intérieurs, et **en ce que** cette bague est elle-même agencée avec une base (3a) recevant des moyens amortisseurs, d'une part au moins des moyens amortisseurs transversaux (3b).

5. Dispositif selon la revendication 4, **caractérisé en ce que** la bague (3) comprend des moyens amortisseurs (3c) latéraux.

6. Dispositif selon la revendication 4, **caractérisé en ce que** la bague est réalisée en matériau élastomère avec mémoire élastique de déformation, et plus particulièrement celui connu sous la marque enregistrée « COURBHANE ».

7. Dispositif selon la revendication 4, **caractérisé en ce que** la bague (3) est fendue transversalement, et est susceptible de s'ouvrir pour être introduite autour du moyeu du manchon, et se refermer, c'est-à-dire avec ses extrémités (3d) bout à bout, une fois mise en place.

8. Dispositif selon la revendication 4, **caractérisé en ce que** la bague présente le long de chacune de ses bordures périphériques des parois en retour (3e) venant en regard des parois intérieures correspondantes du manchon.

9. Dispositif selon la revendication 4, **caractérisé en ce que** la bague (3) présente sur toute sa longueur développée et transversalement une pluralité de moyens amortisseurs sous forme de boudins (3b) conformés monoblocs avec une capacité élastique de déformation par écrasement.

10. Dispositif selon la revendication 9, **caractérisé en ce que** la longueur des boudins est telle qu'elle est inférieure à la largeur de la bague entre ses parois (3e) pour permettre une bonne déformabilité, et **en ce que** les boudins (3b) ont une capacité de déformation dans le sens radial d'écrasement de la bague.

11. Dispositif selon la revendication 4, **caractérisé en ce que** la bague comprend des moyens amortisseurs complémentaires réalisés sur les flancs latéraux (3c) de la bague, avec des bordures de jonction en débordement (3c) ou en saillie extérieure de manière à venir se centrer et en appui contre les flancs (2d) en regard du manchon, et **en ce que** lesdites bordures (3c) ainsi conformées assurent une fonction amortisseur complémentaire par déformation élastique lorsqu'elles sont sollicitées dans un plan axial.

12. Dispositif selon la revendication 4, **caractérisé en ce que** les flancs latéraux (3e) de la bague sont droits et perpendiculaires par rapport à la base de la bague, et **en ce que** l'amortissement axial est assuré par des plots (4) en matériau élastomère et déformable, disposés et fixés sur les flancs intérieurs des parois du manchon.

13. Dispositif selon l'une quelconque des revendications 1 à 12, **caractérisé en ce que** les tubes sont des tubes de l'industrie pétrolière en mer.

## Claims

1. Device for maintaining and damping very long pipes in position in relation to fixed support structures, the said device being inserted between a pipeline and a fixed support (1), the latter enabling the positioning of a plurality of pipelines, the device comprising a cylindrical sleeve (2) having a central hub (2c) and sides (2d) extending outwards and permitting the passage through a central bore (2e) of a pipeline, the said sleeve receiving around its central hub and its sides a shaped component (3) with an elastic deformation capacity performing a damping function, at least radially, and an elastic return function, the said component (3) being deformed temporarily when likely to abut against the said fixed support, according to the movements induced by the pipeline depending on environmental constraints, the said device ensuring the control and absorption of axial and radial movements connected with the position of the pipeline and its expansion.

2. Device according to claim 1, **characterised in that** the cylindrical sleeve (2) is made in two halves (2a, 2b) which after being brought together are connected to each other by connection means (6), and **in that** the sleeve comprises the central hub (2c) and laterally two sides (2d) extending outwards and recessed in relation to the ends of the hub formed in one piece, and **in that** the assembly is made of a rigid plastics material, and **in that** the said internal bore (2e) of the sleeve is internally smooth and of a substantially larger diameter than the diameter of the pipeline passing through it.

3. Device according to claim 2, **characterised in that** the said sides (2d) form crowns and may have external stiffening ribs (2f).

4. Device according to one of the preceding claims 1 and 2, **characterised in that** it comprises at least one additional shaped component (3) performing a damping function, and **in that** the component (3) is designed and made in the form of a ring arranged around the hub of the sleeve and facing its inner lateral sides, and **in that** this ring itself has a base (3a) receiving damping means, on at least one side of the transverse damping means (3b).

5. Device according to claim 4, **characterised in that** the ring (3) comprises lateral damping means (3c).

6. Device according to claim 4, **characterised in that** the ring is made of an elastomer material with an elastic deformation memory, and more particularly that known by the registered trade mark "COURBHANE".

7. Device according to claim 4, **characterised in that** the ring (3) is split transversely, and is capable of opening to be fitted around the hub of the sleeve, and to close up again, i.e. with its ends (3d) end-to-end, once in position.

8. Device according to claim 4, **characterised in that** the ring has along each of its peripheral edges return walls (3e) facing the corresponding internal walls of the sleeve.

9. Device according to claim 4, **characterised in that** the ring (3) has along its entire unrolled length and extending transversely a plurality of damping means in the form of beads (3b) formed in one piece and with an elastic capacity of deformation by crushing.

10. Device according to claim 9, **characterised in that** the length of the beads is such that it is less than the width of the ring between its walls (3e) so as to enable good deformability, and **in that** the beads (3b) have a capacity of deformation in the radial crushing direction of the ring.

11. Device according to claim 4, **characterised in that** the ring comprises additional damping means on the lateral sides (3e) of the ring, with connection edges (3c) extending or protruding outwards so as to centre and rest against the opposite-facing sides (2d) of the sleeve, and **in that** the said edges (3c) thus shaped perform an additional damping function by elastic deformation when they are stressed in an axial plane.

12. Device according to claim 4, **characterised in that** the lateral sides (3e) of the ring are straight and perpendicular to the base of the ring, and **in that** axial damping is ensured by lugs (4) made of a deformable elastomer material, positioned and fixed on the internal sides of the sleeve walls.

13. Device according to one of the preceding claims 1 to 12, **characterised in that** the pipes are pipes used in the offshore oil industry.

## Patentansprüche

1. Vorrichtung zur Fixierung und Lagedämpfung von langen Rohrleitungen an ortsfesten Tragestrukturen, wobei diese Vorrichtung zwischen einer Pipeline und einer ortsfesten Halterung (1) eingesetzt ist, wobei letztere die Positionierung mehrerer Pipelines ermöglicht, während die Vorrichtung eine zylindrische Muffe (2) umfasst, die eine mittlere Nabe (2c) und außen vorstehende Seitenteile (2d) aufweist und die Durchführung einer Pipeline durch eine zentrale Bohrung (2e) ermöglicht, wobei die Muffe um die mittlere Nabe und ihre Seitenteile herum ein elastisch verformbares profiliertes Bauteil (3) aufnimmt, das die Aufgabe einer zumindest radialen Dämpfung und elastischen Rückholung erfüllt, wobei dieses Bauteil (3) zeitweilig verformt wird, wenn es in Abhängigkeit von den umgebungsbedingten Bewegungen der Pipeline an der besagten festen Halterung in Anschlag kommt, wobei die besagte Vorrichtung die Kontrolle und Absorption der aufgrund der Lage der Pipeline und ihrer Dehnung auftretenden axialen und radialen Bewegungen gewährleistet.

2. Vorrichtung nach Anspruch 1, **dadurch gekennzeichnet, dass** die zylindrische Muffe (2) aus zwei Hälften (2a-2b) besteht, die nach Zusammenführung durch Verbindungsmittel (6) fest miteinander verbunden werden, und dass die Muffe die mittige Nabe (2c) und seitlich zwei außen vorstehende und gegenüber den Enden der einstückig ausgebildeten Nabe zurückversetzte Seitenteile (2d) umfasst, und dass die gesamte Baugruppe aus einem starren Kunststoffmaterial besteht, und dass die besagte Innenbohrung (2e) der Muffe innen glatt ist und einen Durchmesser besitzt, der wesentlich größer ist als der Durchmesser der durchquerenden Pipeline.

3. Vorrichtung nach Anspruch 2, **dadurch gekennzeichnet, dass** die besagten Seitenteile (2d) Kränze bilden und außen mit Versteifungsrippen (2f) versehen sein können.

4. Vorrichtung nach einem der Ansprüche 1 und 2, **dadurch gekennzeichnet, dass** sie mindestens ein zusätzliches profiliertes Bauteil (3) umfasst, das eine Dämpfungsfunktion ausübt, und dass dieses Bauteil (3) in Form eines Ringes konzipiert und ausgeführt ist, der um die Nabe der Muffe herum und deren inneren Seitenteilen zugewandt angeordnet ist, und dass der Ring seinerseits mit einem Basisteil (3a) ausgebildet ist, das auf mindestens einer Seite der querverlaufenden Dämpfungseinrichtungen (3b) weitere dämpfende Einrichtungen aufnimmt.

5. Vorrichtung nach Anspruch 4, **dadurch gekennzeichnet, dass** der Ring (3) seitliche Dämpfungseinrichtungen (3c) besitzt.

6. Vorrichtung nach Anspruch 4, **dadurch gekennzeichnet, dass** der Ring aus einem Elastomer mit elastischem Formgedächtnis, genauer gesagt aus dem unter dem eingetragenen Warenzeichen « COURBHANE » bekannten Material, ausgeführt ist.

7. Vorrichtung nach Anspruch 4, **dadurch gekennzeichnet, dass** der Ring (3) in Querrichtung gespalten und geeignet ist, sich zu öffnen, damit er um die Nabe der Muffe herum eingeführt werden kann, und sich - in eingesetzter Position mit aneinanderstoßenden Enden (3d) - wieder zu schließen.

8. Vorrichtung nach Anspruch 4, **dadurch gekennzeichnet, dass** der Ring entlang jeder seiner peripheren Umrandungen rückspringende Wände (3e) aufweist, die den entsprechenden Innenwänden der Muffe zugewandt zu liegen kommen.

9. Vorrichtung nach Anspruch 4, **dadurch gekennzeichnet, dass** der Ring (3) auf seiner ganzen Abwicklungslänge und in Querrichtung mehrere wulstförmige Dämpfungseinrichtungen (3b) aufweist, die in einem Stück ausgeformt und durch Stauchung elastisch verformbar sind.

10. Vorrichtung nach Anspruch 9, **dadurch gekennzeichnet, dass** die Länge der Wülste geringer ist als die Breite des Rings zwischen seinen Wänden (3e), um eine gute Verformbarkeit zu möglichen, und dass die Wülste (3b) in radialer Stauchrichtung des Rings elastisch verformbar sind.

11. Vorrichtung nach Anspruch 4, **dadurch gekennzeichnet, dass** der Ring an den Seiten (3c) ergänzende Dämpfungsmittel mit vorspringenden bzw. außen vorstehenden Verbindungsrändern (3e) aufweist, um sich zu zentrieren und an den gegenüberstehenden Seitenteilen (2d) der Muffe in Anschlag zu kommen, und dass die derart ausgebildeten Ränder (3c) eine ergänzende Dämpfungsfunktion durch elastische Verformung ausüben, wenn sie in einer axialen Ebene beansprucht werden.

12. Vorrichtung nach Anspruch 4, **dadurch gekennzeichnet, dass** die Seitenteile (3e) des Rings gerade und senkrecht zur Basis des Rings ausgebildet sind und dass die axiale Dämpfung durch Kontaktklötze (4) aus elastomerem und verformbarem Material erfolgt, die an den Innenseiten der Muffenwände angeordnet und befestigt sind.

13. Vorrichtung nach einem der vorhergehenden Ansprüche 1 - 12, **dadurch gekennzeichnet, dass** es sich bei den Rohren um im Meer verlegte Rohre der Erdölindustrie handelt.
